# EUROPEAN PATENT SPECIFICATION

(11) **EP 2 842 661 B1**
(45) Date of publication and mention of the grant of the patent: **26.09.2018**
(21) Application number: 13782371.2
(22) Date of filing: 23.04.2013
(51) Int. Cl.: B22D 13/06, B22D 27/20, B22D 18/04, B22D 27/04, B29D 30/00, B22D 25/06

(54) **PROCESS FOR PRODUCING CAST OBJECT**
VERFAHREN ZUR HERSTELLUNG EINES GUSSGEGENSTANDES
PROCÉDÉ DE FABRICATION D'UN OBJET COULÉ

(30) Priority: 25.04.2012 JP 2012100377
(43) Date of publication of application: 04.03.2015
(73) Proprietor: Bridgestone Corporation, Tokyo 104-8340 (JP)
(72) Inventor: ISHIHARA, Yasuyuki, Kodaira-shi Tokyo 187-8531 (JP)
(74) Representative: Oxley, Robin John George
(86) International application number: PCT/JP2013/061901
(87) International publication number: WO 2013/161806

(56) References cited:
- JP-A- S5 758 968
- JP-A- 2002 096 157
- JP-A- 2008 188 620
- JP-A- 2008 194 794
- JP-A- 2010 227 965
- US-A- 5 560 419

## Description

### Technical Field

The present invention relates to a process for producing a cast-metal by solidifying a molten metal in a casting mold.

### Background Art

When a cast-metal object is to be produced, various casting defects (shrinkage cavity, blow defect and the like) might occur in a cast-metal object. Moreover, due to coarsening of a crystal structure in a specific portion of a cast-metal object, mechanical characteristics or strength of the cast-metal object might deteriorate. In response to that, improvement of a quality of the cast-metal object has been required by suppressing occurrence of a casting defect and a coarse crystal structure. Particularly, in precision casting, a shape by casting is to be a shape of an end product, and since the casting defect and the coarse crystal structure remain as they are in the product, the quality of the cast-metal object needs to be further improved.

In a mold for tire molding produced by precision casting, too, casting defects (shrinkage cavity, for example) might occur at a specific portion. The mold for tire molding is a mold for molding a tire used in an automobile or the like and is cast by a casting mold made of plaster in general. In casting, the mold for tire molding is molded in a casting mold, and fine projections are formed on the mold for tire molding for forming recess portions (grooves and the like) in a tire. At that time, the projections are formed by filling a molten metal in recess portions (grooves and the like) formed in the casting mold and solidifying it. However, as will be described later, it is difficult to produce a perfect mold for tire molding with no shrinkage cavity.

That is, a shrinkage cavity occurs in a space (closed space) formed between a surface of the casting mold and an equal solidification time curved surface of the molten metal. The equal solidification time curved surface is a curved surface connecting positions where the molten metal is solidified in the same time in the casting mold. By making the surface of the casting mold and the equal solidification time curved surface orthogonal to each other, formation of a closed space and occurrence of a shrinkage cavity can be prevented. Thus, when a mold for tire molding is to be cast, the surface of the casting mold is generally conformed to the direction of the gravity and set so that a direction (solidification direction) in which solidification of the molten metal proceeds from top to bottom (or from bottom to top). However, since the casting mold for a mold for tire molding has a plurality of fine concave portions, a closed space might be generated between a surface of the concave portion and the equal solidification time curved surface. Thus, it is difficult to completely prevent occurrence of a shrinkage cavity.

On the other hand, a casting method for coping with occurrence of a casting defect by providing a hole, a slit or a metal member in a casting mold has been known (see PTL 1).

However, in the prior-art casting method, it is necessary to specify in advance a portion in which a closed space is formed by solidification simulation or the like. Moreover, since a hole, a slit, or a metal member is provided in the casting mold, time and labor for casting tend to increase. After casting, since it is necessary to adjust a shape of the cast-metal object by manual finishing in a portion corresponding to the hole, the slit or the metal member, time and labor after casting also increase. Therefore, coping with occurrence of the casting defect more simply is required. In addition, even if the cast-metal object is produced with the prior-art casting method, there is a concern that a casting defect occurs in accordance with a casting method. Moreover, it is difficult to improve a crystal structure of the cast-metal object, and there is a concern that a coarse crystal structure might be generated. Reference is also made to JP 2010-227965, which discloses a method for controlling the solidification of casting, JP S57-58968, which discloses a mold for low pressure casting and JP 2008-188620, which discloses a casting method and mold.

### Citation List

### Patent Literature

PTL 1: Japanese Patent Laid-Open No. 2005-169436

### Summary of Invention

### Technical Problem

The present invention was made in view of the above-described prior-art problems and has an object to suppress occurrence of a casting defect in a cast-metal object and to make a crystal structure of the cast-metal object fine. Solution to Problem

The present invention is a process for producing a cast-metal object by solidifying a molten metal in a casting mold and is a process for producing a cast-metal object as set out in claims 1 and 2.

### Advantageous Effects of Invention

According to the present invention, occurrence of a casting defect in a cast-metal object can be suppressed. Moreover, a crystal structure of the cast-metal object can be made fine.

### Brief Description of Drawings

[Fig. 1] Figs. 1A and 1B are diagrams illustrating how solidification of a molten metal proceeds.
[Fig. 2] Figs. 2A and 2B are diagrams illustrating how solidification of the molten metal proceeds.
[Fig. 3] Figs. 3A and 3B are diagrams illustrating how solidification of the molten metal proceeds.
[Fig. 4] Figs. 4A and 4B are diagrams illustrating how solidification of the molten metal proceeds.
[Fig. 5] Figs. 5A and 5B are diagrams for explaining occurrence of a casting defect.
[Fig. 6] Figs. 6A and 6B are diagrams for explaining occurrence of the casting defect.
[Fig. 7] Figs. 7A and 7B are diagrams for explaining occurrence of the casting defect.
[Fig. 8] Figs. 8A and 8B are diagrams for explaining occurrence of the casting defect.
[Fig. 9] Figs. 9A to 9C are sectional views illustrating a process for producing a cast-metal object of an embodiment which is not part of the present invention.
[Fig. 10] Figs. 10A to 10C are sectional views illustrating a cast-metal object in which a shrinkage cavity occurs.
[Fig. 11] Figs. 11A to 11C are sectional views illustrating a producing process of the cast-metal object using the gravity.
[Fig. 12] Figs. 12A to 12C are sectional views illustrating the cast-metal object in which a shrinkage cavity occurs.
[Fig. 13] Fig. 13 is a sectional view illustrating the cast-metal object produced by using a centrifugal force.
[Fig. 14] Figs. 14A to 14C are sectional views illustrating a producing process of the cast-metal object by low-pressure casting.
[Fig. 15] Figs. 15A to 15C are sectional views illustrating the cast-metal object in which a shrinkage cavity occurs.
[Fig. 16] Figs. 16A to 16C are views illustrating the cast-metal object produced by a casting mold.
[Fig. 17] Figs. 17A to 17C are sectional views of the casting mold used in a first production test.
[Fig. 18] Figs. 18A to 18C are sectional views of the casting mold used in a second production test.
[Fig. 19] Figs. 19A to 19C are sectional views of the casting mold used in a third production test.
[Fig. 20] Figs. 20A to 20C are sectional views of the casting mold used in a fourth production test.

### Description of Embodiments

An embodiment of a process for producing a cast-metal object and a cast-metal object of the present invention will be explained by referring to the attached drawings.

In the process for producing a cast-metal object of this embodiment, a molten metal obtained by melting a metal material is poured into a casting mold, and the molten metal is solidified in the casting mold so as to produce a cast-metal object. By means of this process for production (casting method), the cast-metal object of this embodiment is produced. An example in which the cast-metal object is a mold for molding a tire (mold for tire molding) and the mold for tire molding is to be produced will be explained below.

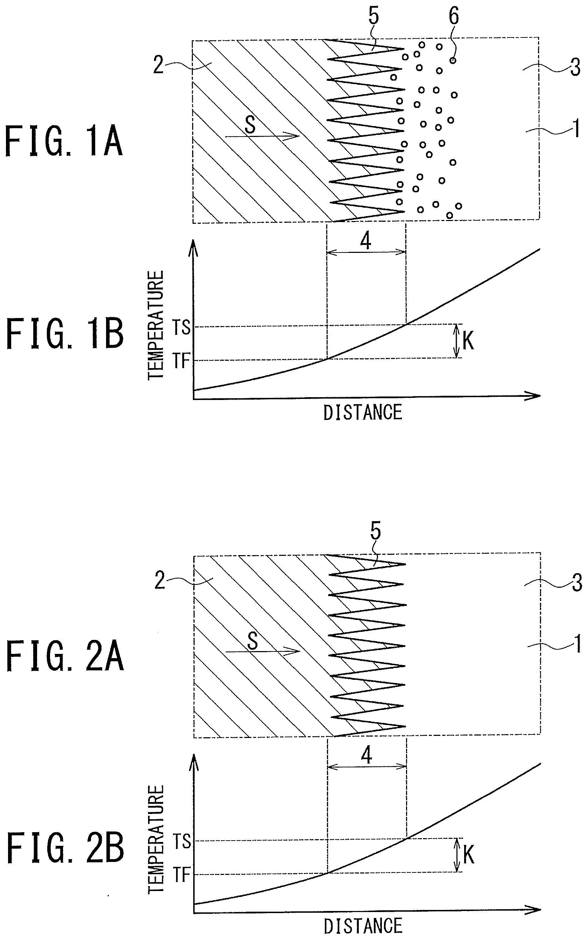

Figs. 1A to 4B are diagrams illustrating how solidification of the molten metal proceeds. In Figs. 1A to 4A, a molten metal 1 during solidification in a casting mold (not shown) is schematically illustrated. Figs. 1B to 4B are graphs illustrating a relationship between each position (distance (lateral axis) of a solidification direction S) and a temperature (vertical axis) in each of Figs. 1A to 4A.

As illustrated in Figs. 1A and 1B, with gradual lowering of the temperature of the molten metal 1, solidification of the molten metal 1 proceeds . Since the molten metal 1 is solidified toward the solidification direction S, a solid phase 2 is gradually formed in the casting mold.

A boundary between the solid phase 2 and a liquid phase 3 of the molten metal 1 is a solid-liquid coexisting region 4 in which the solid phase 2 and the liquid phase 3 coexist. In the solid-liquid coexisting region 4, a dendrite (dendrite 5) grows. The dendrite 5 is a crystal growing from the solid phase 2 toward the liquid phase 3 like a tree branch. In the periphery of the dendrite 5, concentration of an element added to the molten metal 1 might locally rises, and a melting point of the molten metal 1 might locally lower. Moreover, an external force (micro vibration or the like) might act on the dendrite 5. As a result of them, a tip end portion of the dendrite 5 is chipped, and a fraction-state crystal (free crystal 6) is formed. The free crystal 6 is made of a fine crystal freed from the solid phase 2 (here, the dendrite 5) and floats in the molten metal 1.

As described above, while solidification of the molten metal 1 proceeds, the free crystal 6 is generated in the boundary of the solid phase 2 and the liquid phase 3 (solid-liquid coexisting region 4) and is supplied into the molten metal 1. Moreover, the free crystal 6 is pushed out (or, expelled) in the solidification direction S along with the growth of the dendrite 5 and is moved in the solidification direction S in the molten metal 1. In the process for producing a cast-metal object of this embodiment, a quality of the cast-metal object is improved by making use of the free crystal 6 generated in the molten metal 1 when the molten metal 1 is solidified.

Here, the metal material used in casting is usually an alloy in which a plurality of types of elements is blended and one or more additive elements are mixed with a major element. By preparing an alloy, a melting point of the metal material lowers, and a casting performance of the molten metal 1 is adjusted. Moreover, a mechanical property and strength of the cast-metal object are adjusted. When the molten metal 1 including a metal material (alloy) is solidified, a difference occurs between a temperature (TS) at start of solidification and a temperature (TF) when solidification is completed. This temperature difference is called a solidification temperature range K and it changes depending on the metal material.

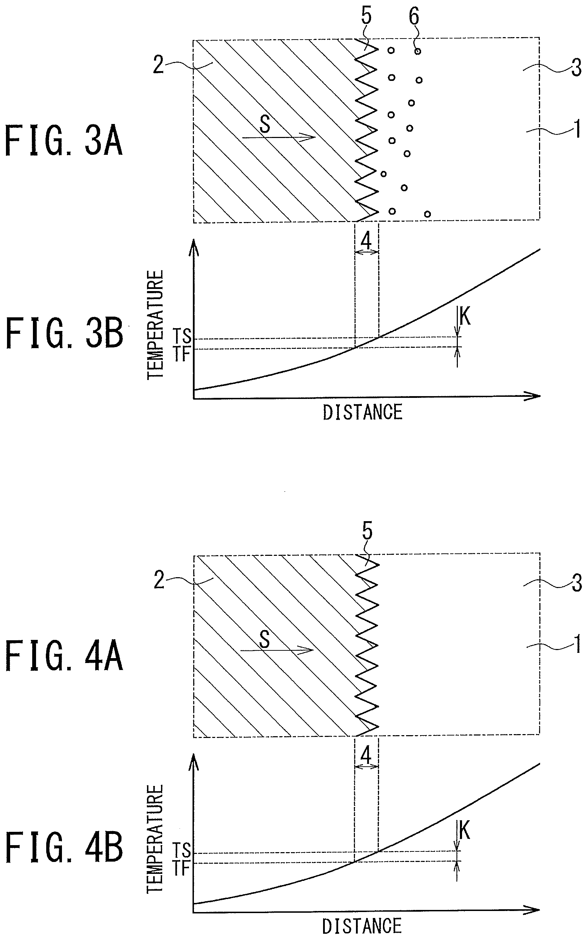

The wider the solidification temperature range K becomes (see Figs. 1B and 2B), the wider the solid-liquid coexisting region 4 becomes and the longer the dendrite 5 grows. On the other hand, the narrower the solidification temperature range K becomes (see Figs. 3B and 4B), the narrower the solid-liquid coexisting region 4 becomes and the shorter the dendrite 5 becomes. The longer the dendrite 5 grows, the tip end portion can become easily chipped and thus, more free crystals 6 are generated. However, in the molten metal 1 including the metal material in which the free crystal 6 is likely to be generated (see Figs. 1A and 3A), the free crystal 6 is frequently generated. In the molten metal 1 including the metal material in which the free crystal 6 is unlikely to be generated (see Figs. 2A and 4A), generation of the free crystal 6 is suppressed. Thus, a generation amount of the free crystal 6 changes in correspondence with the solidification temperature range K and the metal material.

In the molten metal 1 in which the solidification temperature range K is wide and the free crystal 6 is likely to be generated (see Figs. 1A and 1B), the generation amount of the free crystal 6 becomes larger than the generation amounts of the free crystals 6 of the other molten metals 1 (see Figs. 2A to 4A). In these other molten metals 1, the free crystals 6 (see Figs. 2A and 4A) are not generated or the generation amount of the free crystal 6 (see Fig. 3A) becomes small. In response to this generation amount of the free crystal 6, how a casting defect occurs changes. Moreover, the casting defect changes in accordance with a relationship between a surface of the casting mold and an equal solidification time curved surface of the molten metal 1. The state in which the free crystal 6 is not generated includes a state in which the free crystal 6 is generated only in such an amount that the free crystal 6 cannot be used, in addition to a state in which the free crystal 6 is not generated at all.

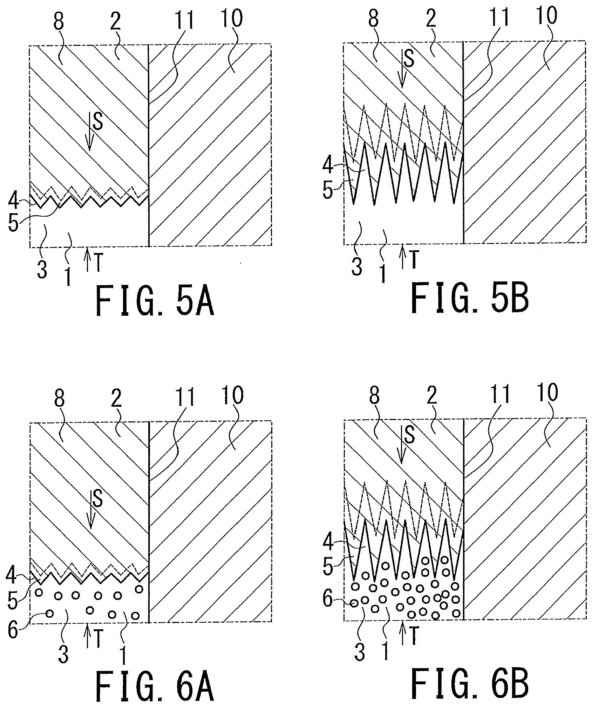

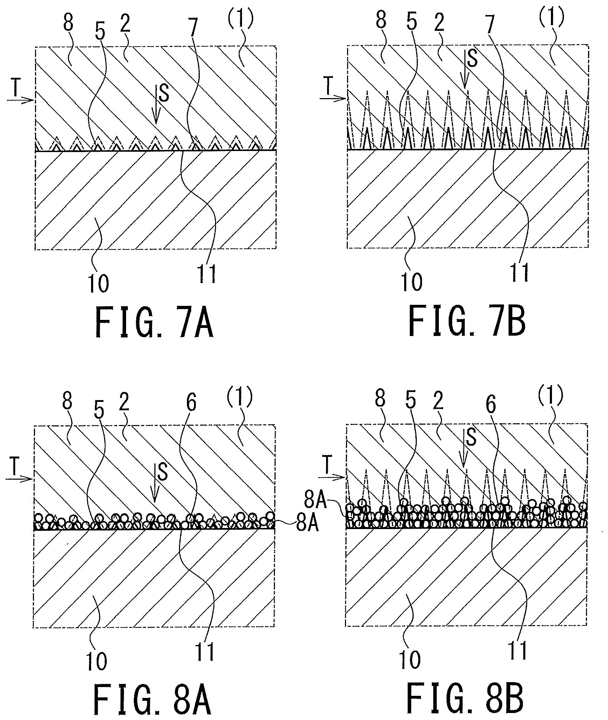

Figs. 5A to 8B are diagrams for explaining occurrence of the casting defect 7 (here, a shrinkage cavity). In Figs. 5A to 8B, a part of a casting mold 10 is illustrated in sectional views, and the molten metal 1 and a cast-metal object 8 in the vicinity of a surface 11 of the casting mold 10 are schematically illustrated. The molten metal 1 is supplied (an arrow T in Figs. 5A to 8B) from a riser (not shown) into the casting mold 10.

As illustrated in Figs. 5A and 5B, and Figs. 6A and 6B, if the solidification direction S of the molten metal 1 is in parallel with the surface 11 of the casting mold 10, the equal solidification time curved surface of the molten metal 1 is orthogonal to the surface 11 of the casting mold 10. Solidification of the molten metal 1 proceeds along the surface 11 of the casting mold 10, and the dendrite 5 grows in the molten metal 1. As a result, the molten metal 1 is supplied in a gap of the dendrites 5 and thus, a shrinkage cavity is unlikely to occur in the cast-metal object 8 regardless of the type of the molten metal 1. That is, when the molten metal 1 not generating the free crystal 6 is solidified, occurrence of the shrinkage cavity is suppressed (see Figs. 5A and 5B) in the molten metal 1 with the narrow solidification temperature range K (see Fig. 4B) and the molten metal 1 with the wide solidification temperature range K (see fig. 2B). Moreover, when the molten metal 1 generating the free crystal 6 is solidified, occurrence of a shrinkage cavity is suppressed (see Figs. 6A and 6B) in the molten metal 1 with the narrow solidification temperature range K (see Fig. 3B) and the molten metal 1 with the wide solidification temperature range K (see Fig. 1B).

As illustrated in Figs. 7A and 7B, and Figs. 8A and 8B, if the solidification direction S of the molten metal 1 is orthogonal to the surface 11 of the casting mold 10, the equal solidification time curved surface of the molten metal 1 becomes parallel with the surface 11 of the casting mold 10. Solidification of the molten metal 1 proceeds toward the surface 11 of the casting mold 10, and the dendrite 5 grows toward the surface 11 of the casting mold 10. When the molten metal 1 is solidified to the surface 11 of the casting mold 10, a cavity is formed on a surface of the cast-metal object 8 (see Figs. 7A and 7B) due to solidification contraction of the molten metal 1. The cavity of the cast-metal object 8 is a space closed by the surface 11 of the casting mold 10 and the dendrite 5. Since the molten metal 1 is not replenished to the cavity of the cast-metal object 8, a shrinkage cavity (casting defect 7) occurs in the cast-metal object 8. At that time, in the molten metal 1 with the narrow solidification temperature range K (see Fig. 4B), the dendrite 5 is short, and thus a small shrinkage cavity occurs (see Fig. 7A). In the molten metal 1 with the wide solidification temperature range K (see Fig. 2B), the dendrite 5 is long, and thus a large shrinkage cavity occurs (See Fig. 7B).

On the other hand, in the molten metal 1 generating the free crystal 6 (see Figs. 8A and 8B), while the molten metal 1 is solidified toward the surface 11 of the casting mold 10, the free crystal 6 in the molten metal 1 is deposited on the surface 11 of the casting mold 10. The free crystal 6 is deposited on the surface 11 until the solidification of the molten metal 1 reaches the surface 11 of the casting mold 10, and the surface 11 is covered by the free crystal 6. As a result, formation of a cavity in the cast-metal object 8 is prevented, and occurrence of the casting defect 7 (shrinkage cavity or the like) is suppressed. Moreover, deposition of the fine free crystals 6 generates a fine crystal structure on the surface of the cast-metal object 8.

In the molten metal 1 with the narrow solidification temperature range K (see Fig. 3B), the generation amount of the free crystal 6 is small, and thus a deposited amount of the free crystal 6 becomes small (see Fig. 8A). In this case, the free crystal 6 is thinly deposited but since the free crystal 6 fills the gap of the short dendrites 5, occurrence of the casting defect 7 is suppressed. In the molten metal 1 with the wide solidification temperature range K (see Fig. 1B), the generation amount of the free crystal 6 is large, and thus the deposited amount of the free crystal 6 increases, and the free crystal 6 is thickly deposited (see Fig. 8B). The gap of the dendrites 5 is reliably filled by the free crystal 6, and occurrence of the casting defect 7 is suppressed.

As described above, in this embodiment, the free crystal 6 in the molten metal 1 is moved toward a predetermined surface 11 (deposited surface) of the casting mold 10 and is deposited on the surface 11. The free crystal 6 is moved in the molten metal 1 and is deposited so as to cover the surface 11 (here, a design surface) of the casting mold 10. As a result, the free crystal 6 is settled on the surface 11 of the casting mold 10. In the casting mold 10, the molten metal 1 is solidified toward the surface 11 of the casting mold 10 on which the free crystal 6 is deposited. For a period from start to end of solidification of the molten metal 1, the free crystal 6 is generated in the molten metal 1 and is gradually deposited. However, if the free crystal 6 is present in the molten metal 1 before solidification of the molten metal 1 starts, this free crystal 6 is also deposited. In this case, the free crystal 6 that is deposited includes the free crystal 6 existing in the molten metal 1 in advance and the free crystal 6 generated in the molten metal 1.

When the entire molten metal 1 is solidified, the cast-metal object 8 having a deposited portion 8A of the free crystal 6 is produced. The deposited portion 8A is a portion on which the free crystal 6 is deposited and includes a fine crystal structure. The deposited portion 8A is formed on the surface of the cast-metal object 8 and covers the surface of the cast-metal object 8. A portion of the cast-metal object 8 other than the deposited portion 8A includes a normal crystal structure (columnar crystal and the like).

Subsequently, the process for producing the cast-metal object 8 of this embodiment will be specifically explained.

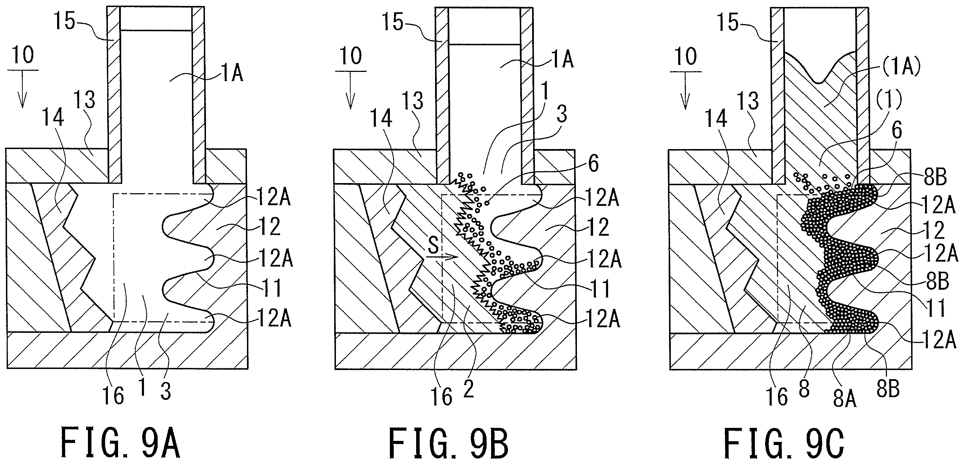

Figs. 9A to 9C are sectional views illustrating the process for producing the cast-metal object 8 according to an embodiment which is not part of the invention. Figs. 9A to 9C illustrate the producing process of the cast-metal object 8. In Figs. 9A to 9C (the same applies to each of the following figures), a portion (product portion) which is made into a product in the cast-metal object 8 is indicated by a two-dot chain line.

The casting mold 10 includes, as illustrated, a main mold 12 for molding the cast-metal object 8, a molding flask 13 for accommodating the main mold 12, a chiller 14, and a supply pipe (stoke) 15 of the molten metal 1.

The cast-metal object 8 which is made into a mold for tire molding is produced by the casting mold 10. Here, the mold for tire molding is a mold for molding a tread for molding a tread portion of a tire and is formed of the cast-metal object 8 having a block shape. A plurality of molds for molding a tread is combined annularly and molds the tread portion of the tire. Thus, one surface of the cast-metal object 8 is formed into a shape corresponding to a tread pattern of the tire by the main mold 12. The surface 11 of the main mold 12 is the design surface and has an irregular surface corresponding to the tread pattern. The cast-metal object 8 is molded into a predetermined shape by the main mold 12.

A cavity 16 is formed in the casting mold 10 by the main mold 12 and the molding flask 13. The chiller 14 is accommodated in the casting mold 10 and is arranged at a position in contact with the molten metal 1. The cavity 16 is an internal space of the casting mold 10 and is formed into a shape corresponding to the shape of the cast-metal object 8. The chiller 14 is arranged facing the main mold 12 and is exposed to the cavity 16. The supply pipe 15 is made of a tubular insulating material and is provided on an upper part of the casting mold 10. The molten metal 1 in the supply pipe 15 is a riser 1A and is supplied to the cavity 16. The cast-metal obj ect 8 is produced by gravity casting by using the casting mold 10.

When the cast-metal object 8 is to be produced, the metal material (an aluminum alloy, for example) is melted and the molten metal 1 is poured into the casting mold 10 (see Fig. 9A) . The metal material is a metal material generating the free crystal 6 during solidification and is melted in a heating furnace (not shown). The molten metal 1 including a melted metal material generates the free crystal 6 along with solidification (see Fig. 9B). Solidification of the molten metal 1 starts from the chiller 14 and proceeds toward the main mold 12. Thus, the solidification direction S of the molten metal 1 is a direction going from the chiller 14 toward the surface 11 of the casting mold 10 (the main mold 12, here) . The equal solidification time curved surface of the molten metal 1 moves in the solidification direction S.

While solidification of the molten metal 1 proceeds, the free crystal 6 is pushed out in the solidification direction S and is moved toward the surface 11 of the casting mold 10 located in the solidification direction S. As a result, while the free crystal 6 in the molten metal 1 is deposited on the surface 11 of the casting mold 10, the molten metal 1 is solidified (see Fig. 9C). Moreover, by adjusting the solidification direction S and the position of the surface 11 of the casting mold 10, the free crystal 6 is moved toward a predetermined portion of the surface 11 and is deposited on the predetermined portion. Here, the free crystal 6 is moved toward a portion where a shrinkage cavity is likely to occur and is deposited on the portion. Since the shrinkage cavity is likely to occur in a concave portion 12A (groove or the like) of the main mold 12, the free crystal 6 is deposited in the concave portion 12A and is filled in the concave portion 12A. As a result, occurrence of the shrinkage cavity in a protruding portion 8B of the cast-metal object 8 is suppressed. At the same time, the deposited portion 8A is formed on the protruding portion 8B of the cast-metal object 8, and a fine crystal structure is generated on the protruding portion 8B.

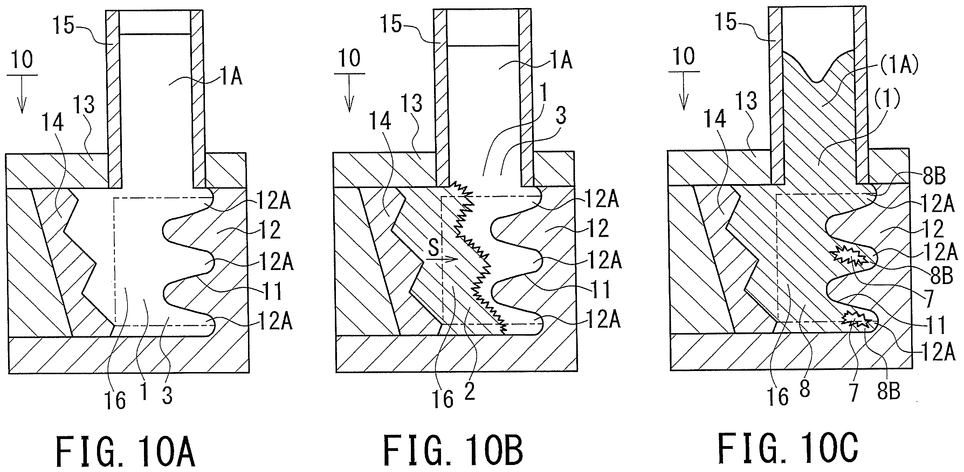

Figs. 10A to 10C are sectional views illustrating the cast-metal object 8 in which the shrinkage cavity occurs . Figs . 10A to 10C illustrate the producing process of the cast-metal object 8 in correspondence with Figs. 9A to 9C.

In the molten metal 1 not generating the free crystal 6, the free crystal 6 is not deposited as illustrated and thus, the shrinkage cavity (casting defect 7) might occur in the cast-metal object 8. The shrinkage cavity is formed in the closed space formed between the surface 11 of the casting mold 10 and the equal solidification time curved surface of the molten metal 1. In this cast-metal object 8, the shrinkage cavity occurs in the protruding portion 8B. Moreover, since the deposited portion 8A is not formed on the protruding portion 8B, an effect of generating a fine crystal structure in the cast-metal object 8 is not obtained.

As described above, according to the process for producing the cast-metal object 8 of this embodiment, occurrence of the casting defect 7 in the cast-metal object 8 can be easily suppressed. Moreover, since the crystal structure of the cast-metal object 8 can be made fine, the mechanical property and strength of the cast-metal object 8 can be improved. As a result, the quality of the cast-metal object 8 can be improved. Since special labor is not needed before and after casting, time and labor for producing the cast-metal object 8 can be reduced.

When the cast-metal object 8 is to be produced by precision casting, too, occurrence of the casting defect 7 can be suppressed. Moreover, the cast-metal object 8 having a narrow and high protruding portion 8B can be produced without the casting defect 7. Thus, this process for producing the cast-metal object 8 is suitable for production of a mold for tire molding and can effectively improve the quality of the mold for tire molding.

Subsequently, a plurality of embodiments with different casting methods will be explained. In the following, the same configuration with the casting mold 10 already explained is given the same name and reference numerals and explanation thereof will be omitted.

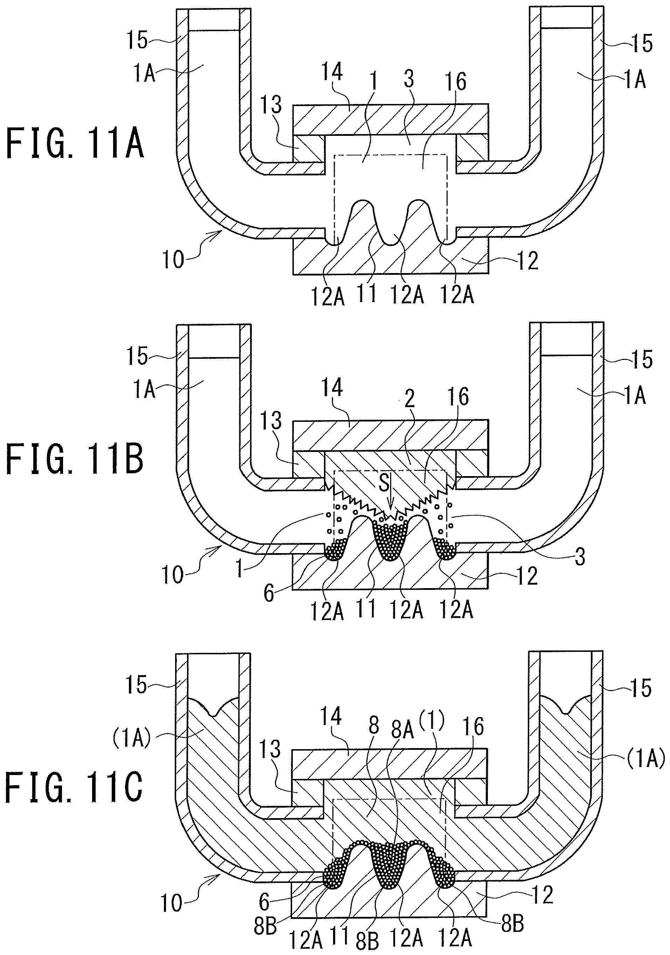

Figs. 11A to 11C are sectional views illustrating a producing process of the cast-metal object 8 using the gravity.

In this casting mold 10, as illustrated, the main mold 12 is installed on a lower part of the casting mold 10 and is arranged with the surface 11 of the main mold 12 directed upward. The chiller 14 is arranged above the main mold 12 so as to face the main mold 12. The cavity 16 is formed between the main mold 12 and the chiller 14. Two supply pipes 15 protrude upward from a side portion of the casting mold 10.

In production of the cast-metal object 8, a metal material generating the free crystal 6 is melted, and the molten metal 1 is poured into the casting mold 10 (see Fig. 11A). Solidification of the molten metal 1 starts from the chiller 14 and proceeds toward the main mold 12 located below the chiller 14 (see Fig. 11B). The solidification direction S of the molten metal 1 is a direction (downward direction) going from the chiller 14 toward the surface 11 of the casting mold 10 (main mold 12). While solidification of the molten metal 1 proceeds, the free crystal 6 is pushed out in the solidification direction S and is settled in the molten metal 1 by the gravity.

The free crystal 6 is moved toward the surface 11 of the casting mold 10 located in the downward direction and is deposited on the surface 11. At that time, the free crystal 6 in the molten metal 1 is settled toward a predetermined portion of the surface 11 of the casting mold 10 by the gravity and is deposited on the surface 11. Moreover, the free crystal 6 is settled toward and deposited on the portion where the shrinkage cavity is likely to occur (the concave portion 12A of the main mold 12). The free crystal 6 is deposited in the concave portion 12A with priority and is filled in the concave portion 12A. As described above, while the free crystal 6 in the molten metal 1 is deposited on the surface 11 of the casting mold 10, the molten metal 1 is solidified (see Fig. 11C) . Deposition of the free crystal 6 suppresses occurrence of the shrinkage cavity in the protruding portion 8B of the cast-metal object 8. The deposited portion 8A is formed on the protruding portion 8B of the cast-metal object 8, and a fine crystal structure is generated.

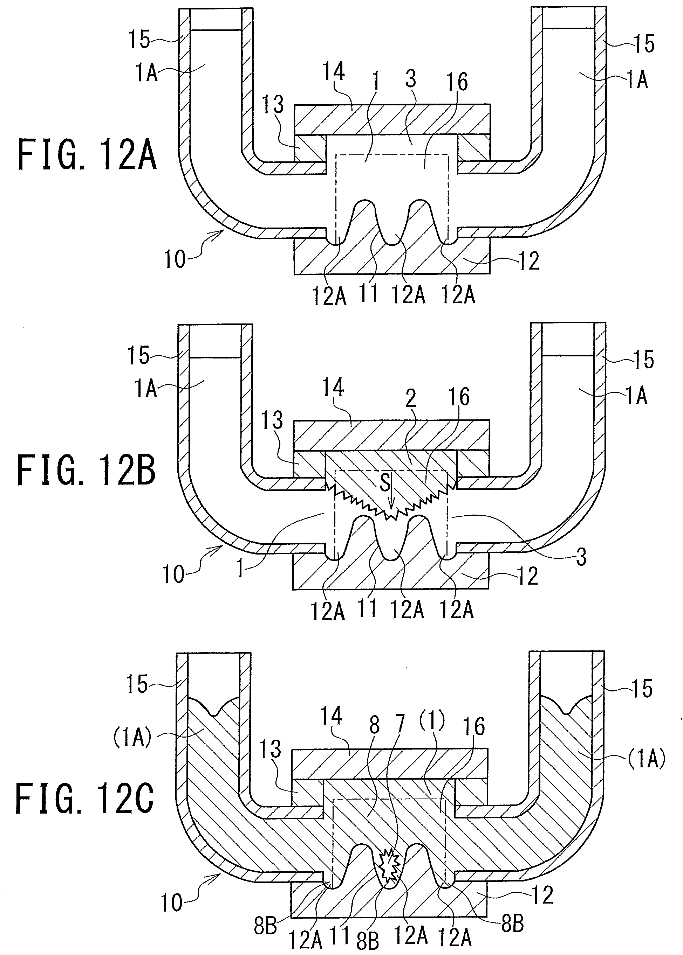

Figs. 12A to 12C are sectional views illustrating the cast-metal object 8 in which the shrinkage cavity occurs . Figs . 12A to 12C illustrate the producing process of the cast-metal object 8 in correspondence with Figs. 11A to 11C.

In the molten metal 1 not generating the free crystal 6, settlement and deposition of the free crystal 6 are not generated as illustrated and thus, the shrinkage cavity (casting defect 7) might occur in the cast-metal object 8. The shrinkage cavity occurs in the protruding portion 8B of the cast-metal object 8 in the concave portion 12A of the main mold 12. Moreover, the deposited portion 8A is not formed on the protruding portion 8B of the cast-metal object 8.

As described above, by making use of the free crystal 6, occurrence of the casting defect 7 can be suppressed, and the crystal structure of the cast-metal object 8 can be made fine. Moreover, by settling the free crystal 6 toward the surface 11 of the casting mold 10 by the gravity, the free crystal 6 can be reliably deposited on the surface 11. As a result, occurrence of the casting defect 7 can be reliably suppressed. By locating the portion where the casting defect 7 in the cast-metal object 8 occurs in the moving direction (settling direction) of the free crystal 6 by the gravity, occurrence of the casting defect 7 can be reliably suppressed. When the free crystal 6 is to be deposited, a physical force other than the gravity (a centrifugal force, an electromagnetic force, for example) may be used.

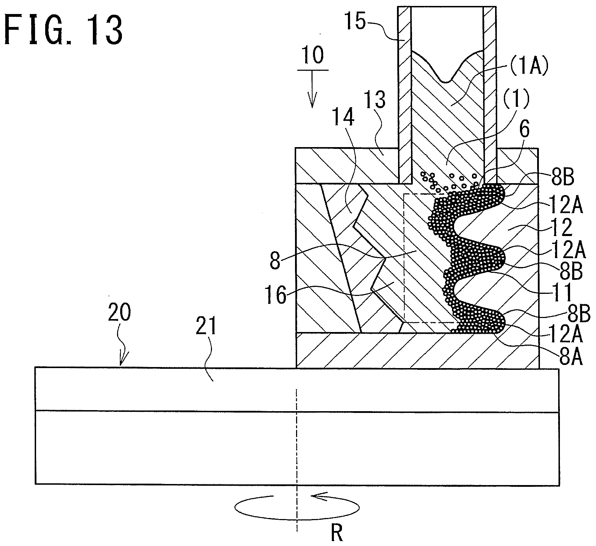

Fig. 13 is a sectional view illustrating the cast-metal object 8 produced by using a centrifugal force. The casting mold 10 illustrated in Fig. 13 is the same as the casting mold 10 illustrated in Figs. 9A to 9C, and the cast-metal object 8 is produced by a process equivalent to the process explained in Figs. 9A to 9C. Thus, in Fig. 13, only the figure after the molten metal 1 is solidified is illustrated in correspondence with Fig. 9C.

The casting mold 10 is fixed on a rotating table 21 of a rotating device 20 as illustrated. The rotating device 20 rotates the rotating table 21 by a driving device (not shown) (arrow R). As a result, the casting mold 10 into which the molten metal 1 is poured is rotated, and a centrifugal force is applied to the molten metal 1. While solidification of the molten metal 1 proceeds, the free crystal 6 is pushed out in the solidification direction S and is flowed in the direction of the centrifugal force in the molten metal 1 by the centrifugal force. Since the main mold 12 is located in the direction of the centrifugal force in the rotating casting mold 10, the free crystal 6 is flowed toward the main mold 12.

The free crystal 6 is moved toward the surface 11 of the casting mold 10 (main mold 12) located in the direction of the centrifugal force and is deposited on the surface 11. At that time, the free crystal 6 in the molten metal 1 is guided by the centrifugal force toward the predetermined portion of the surface 11 of the casting mold 10 and is deposited on the surface 11. Moreover, the free crystal 6 is guided to the portion where the shrinkage cavity is likely to occur (the concave portion 12A of the main mold 12) and is put in the concave portion 12A. The free crystal 6 is deposited in the concave portion 12A with priority and is filled in the concave portion 12A. While the free crystal 6 in the molten metal 1 is deposited on the surface 11 of the casting mold 10, the molten metal 1 is solidified.

As described above, by making use of the free crystal 6, occurrence of the casting defect 7 can be suppressed, and the crystal structure of the cast-metal object 8 can be made fine. Moreover, by guiding the free crystal 6 toward the surface 11 of the casting mold 10 by the centrifugal force, the free crystal 6 can be reliably deposited on the surface 11. As a result, occurrence of the casting defect 7 can be reliably suppressed. By locating the portion where the casting defect 7 in the cast-metal object 8 occurs in the moving direction (guiding direction) of the free crystal 6 by the centrifugal force, occurrence of the casting defect 7 can be reliably suppressed.

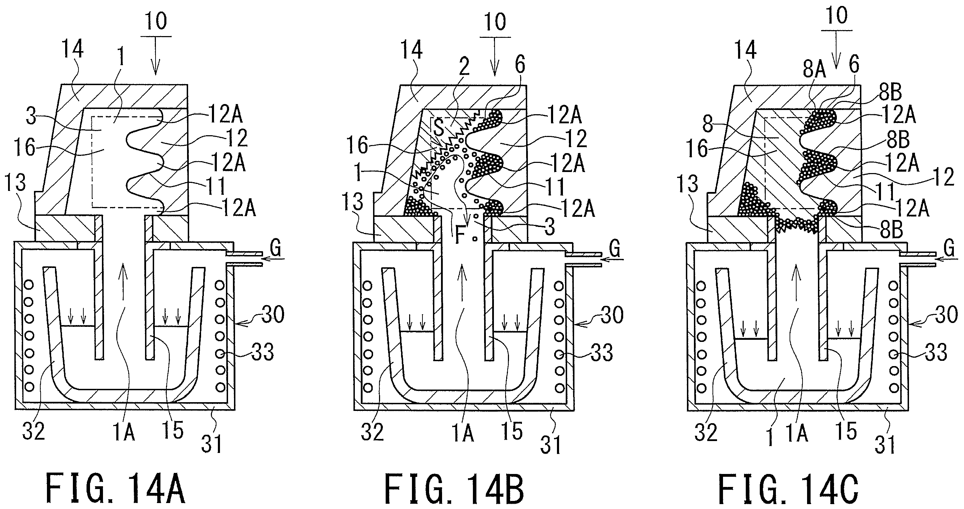

Figs. 14A to 14C are sectional views illustrating the producing process of the cast-metal object 8 by low-pressure casting.

The casting mold 10 is installed on an upper part of a supply device 30 of the molten metal 1 as illustrated. The supply device 30 includes a pressurized vessel 31, a crucible 32 accommodated in the pressurized vessel 31, and a heating device 33 for heating the crucible 32. The molten metal 1 in the crucible 32 is heated to a predetermined temperature by the heating device 33. The supply pipe 15 protrudes downward from the casting mold 10 and is arranged in the pressurized vessel 31 and the crucible 32. The molten metal 1 is supplied through the supply pipe 15 into the casting mold 10 (cavity 16) from the crucible 32. When a pressurizing device (not shown) supplies a pressurized gas G into the pressurized vessel 31, the molten metal 1 in the crucible 32 is pressurized by the pressurized gas G. As a result, the molten metal 1 is pushed up through the supply pipe 15 and is poured into the casting mold 10.

In production of the cast-metal object 8, the metal material generating the free crystal 6 is melted, and the molten metal 1 is poured into the casting mold 10 by the supply device 30 (see Fig. 14A). Solidification of the molten metal 1 starts from the chiller 14 and proceeds toward the main mold 12 (see Fig. 14B). The chiller 14 is provided on an upper part and side parts of the casting mold 10 so as to surround the main mold 12. Thus, the solidification direction S of the molten metal 1 is a direction going from a corner part of the chiller 14 toward the surface 11 of the casting mold 10 (main mold 12) (diagonally downward direction). Moreover, during solidification of the molten metal 1, a flow F of the molten metal 1 is generated by convection. While solidification of the molten metal 1 proceeds, the free crystal 6 is pushed out in the solidification direction S and is flowed in the molten metal 1 by the flow F of the molten metal 1. The free crystal 6 is moved toward the surface 11 of the casting mold 10 located in the direction in which the molten metal 1 is flowed and is deposited on the surface 11.

In the casting mold 10, the free crystal 6 in the molten metal 1 is flowed toward the surface 11 of the casting mold 10 by the flow F of the molten metal 1 and is deposited on the surface 11. Moreover, by making adjustment so that the flow F of the molten metal 1 goes toward a predetermined portion of the surface 11, the free crystal 6 is flowed toward the predetermined portion of the surface 11. The free crystal 6 is carried to the surface 11 of the casting mold 10 carried by the flow F of the molten metal 1 and is deposited on the predetermined portion of the surface 11. At that time, the free crystal 6 in the molten metal 1 is flowed toward a portion where the molten metal 1 is stagnant (stagnant portion) carried by the flow F of the molten metal 1 in the casting mold 10. The free crystal 6 stays in the stagnant portion carried by the flow F of the molten metal 1. As a result, the free crystal 6 is deposited on the surface 11 of the casting mold 10 where the molten metal 1 is stagnant.

The stagnant portion of the molten metal 1 is a portion where the shrinkage cavity is likely to occur, and the concave portion 12A of the main mold 12 becomes the stagnant portion. The free crystal 6 is flowed toward the concave portion 12A of the main mold 12 and is deposited in the concave portion 12A with priority. As described above, while the free crystal 6 in the molten metal 1 is deposited on the surface 11 of the casting mold 10, the molten metal 1 is solidified (see Fig. 14C) . Deposition of the free crystal 6 suppresses occurrence of the shrinkage cavity in the protruding portion 8B of the cast-metal object 8. On the protruding portion 8B of the cast-metal object 8, the deposited portion 8A is formed, and a fine crystal structure is generated.

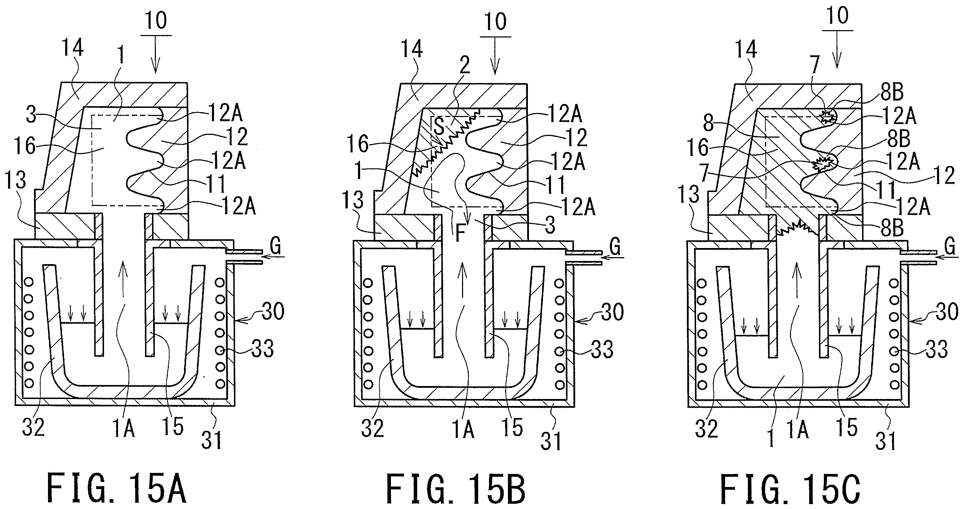

Figs. 15A to 15C are sectional views illustrating the cast-metal object 8 in which the shrinkage cavity occurs . Figs . 15A to 15C illustrate the producing process of the cast-metal object 8 in correspondence with Figs. 14A to 14C.

In the molten metal 1 not generating the free crystal 6, the flow and deposition of the free crystal 6 are not generated as illustrated and thus, the shrinkage cavity (casting defect 7) might occur in the cast-metal obj ect 8. The shrinkage cavity occurs on the protruding portion 8B of the cast-metal object 8 in the concave portion 12A of the main mold 12. Moreover, the deposited portion 8A is not formed on the protruding portion 8B of the cast-metal object 8.

As described above, by making use of the free crystal 6, occurrence of the casting defect 7 can be suppressed and the crystal structure of the cast-metal object 8 can be made fine. Moreover, by flowing the free crystal 6 toward the surface 11 of the casting mold 10 by the flow F of the molten metal 1, the free crystal 6 can be reliably deposited on the surface 11. As a result, occurrence of the casting defect 7 can be reliably suppressed. By carrying the free crystal 6 by the flow F of the molten metal 1 and depositing it on the surface 11 of the casting mold 10 where the molten metal 1 is stagnant, occurrence of the casting defect 7 can be suppressed more reliably. By locating the portion where the casting defect 7 in the cast-metal object 8 occurs in the moving direction (flowing direction) of the free crystal 6 by the flow F of the molten metal 1, occurrence of the casting defect 7 can be reliably suppressed.

The free crystal 6 may be moved to the surface 11 of the casting mold 10 by using any one of the gravity, the centrifugal force, and the flow F of the molten metal 1. Moreover, the free crystal 6 may be moved to the surface 11 of the casting mold 10 by using arbitrary combination of the gravity, the centrifugal force, and the flow F of the molten metal 1.

### (Production test of cast-metal object 8)

In order to confirm the effect of the present invention, first to fourth production tests were conducted, and the cast-metal object 8 was produced. In each of the production tests, the molten metal 1 including the metal material generating the free crystal 6 is solidified in the casting mold 10 as described above, and the cast-metal object 8 (hereinafter referred to as an embodied product) was produced. Moreover, for comparison, the molten metal 1 including the metal material not generating the free crystal 6 is solidified in the casting mold 10, and the cast-metal object 8 (hereinafter referred to as a comparative product) was produced. The embodied product and the comparative product were inspected, and occurrence situations of the casting defect 7 were investigated.

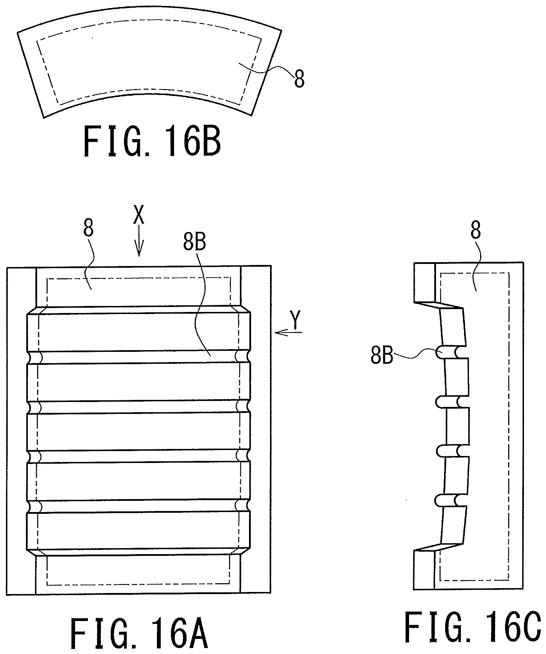

Figs. 16A to 16C are views illustrating the cast-metal object 8 produced by the casting mold 10. Fig. 16A is a front view of the cast-metal object 8. Fig. 16B is a top view of the cast-metal object 8 when seen from an X direction of Fig. 16A. Fig. 16C is a side view of the cast-metal object 8 when seen from a Y direction of Fig. 16A.

The cast-metal object 8 is a mold for tire molding as illustrated and is formed into a block shape. After the cast-metal object 8 is taken out of the casting mold 10, the mold for tire molding is formed by working the cast-metal object 8. Here, the cast-metal object 8 is a mold for tread molding (sector segment) and has a plurality of protruding portions 8B for forming grooves in a tire.

Production conditions of the cast-metal objects 8 (embodied product, comparative product) are as follows:
Metal material of the embodied product: JIS casting aluminum alloy (AC2B) (Si: 6%, Cu: 2.5%, Mg: 0.4%, Fe: 0.5%, Zn: 0.2%, Bal: Al)
Metal material of the comparative product: JIS casting aluminum alloy (AC4C) (Si: 7%, Mg: 0.4%, Fe: 0.3%, Bal: Al)
Each of the metal materials was melted, and the molten metal 1 (690°C) was poured into the casting mold 10.

Materials of each portion of the casting mold 10 are as follows:
Main mold 12: non-foaming plaster (by Noritake Co., Ltd., product name: G-6)
Chiller 14: gray cast iron (JIS standard product, FC 250) Molding flask 13: insulating material (calcium silicate) Supply pipe 15: insulating material (alumina ceramic)
The nine embodied products and the nine comparative products were cast by four types of the casting molds 10 illustrated below. At that time, the chiller 14 was pre-heated to a temperature of 250 to 300°C.

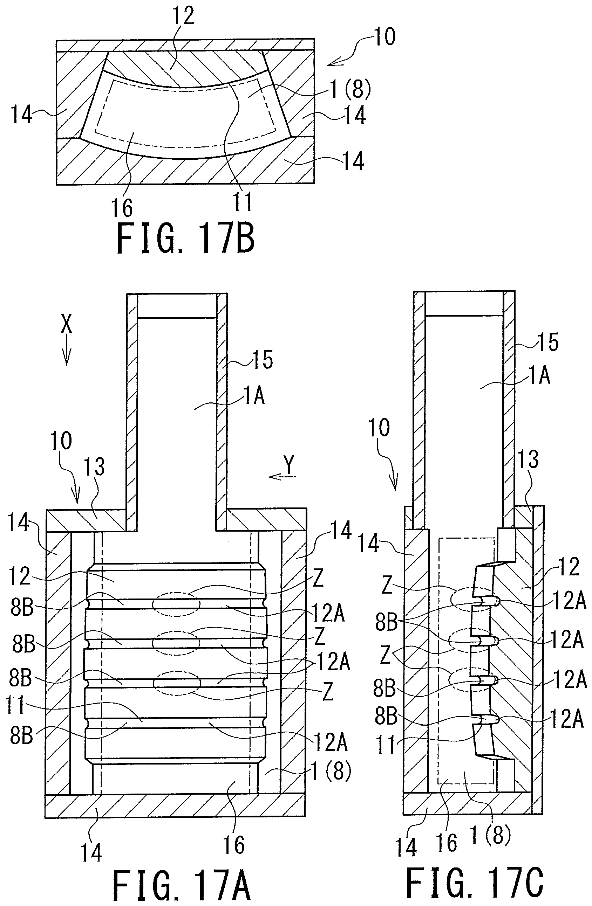

Figs. 17A to 17C are sectional views of the casting mold 10 used in the first production test. Fig. 17A illustrates the casting mold 10 when seen from the front. Fig. 17B illustrates the casting mold 10 when seen from the X-direction of Fig. 17A. Fig. 17C illustrates the casting mold 10 when seen from the Y-direction of Fig. 17A.

As illustrated, the casting mold 10 of the first production test was configured similarly to the casting mold 10 illustrated in Figs. 9A to 9C. The main mold 12 is accommodated in the box-shaped chiller 14 and is arranged on the side part in the casting mold 10.

During casting, a height of the riser 1A was set to 300 mm, and the cast-metal object 8 was produced by gravity casting. In the comparative products in the first production test, slight shrinkage cavities occurred in seven cast-metal objects 8. The shrinkage cavities occurred in a Z portion (the protruding portion 8B or a periphery of the protruding portion 8B). On the other hand, in the embodied products, extremely slight shrinkage cavities occurred in the Z portions of two cast-metal objects 8.

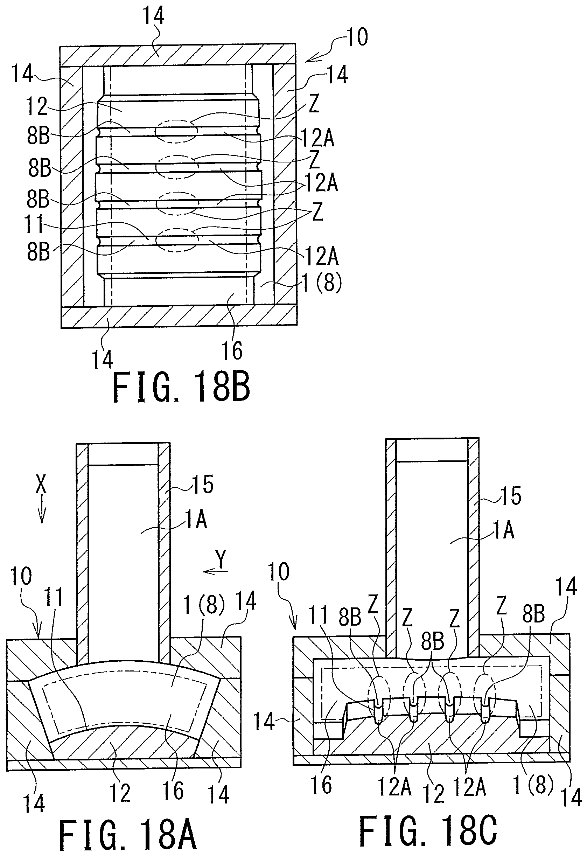

Figs. 18A to 18C are sectional views of the casting mold 10 used in the second production test. Fig. 18A illustrates the casting mold 10 when seen from the front. Fig. 18B illustrates the casting mold 10 when seen from the X-direction of Fig. 18A. Fig. 18C illustrates the casting mold 10 when seen from the Y-direction of Fig. 18A.

As illustrated, the casting mold 10 of the second production test was configured similarly to the casting mold 10 illustrated in Figs. 11A to 11C. The main mold 12 is accommodated in the box-shaped chiller 14 and is arranged on the lower part in the casting mold 10. Above the main mold 12, the supply pipe 15 and the chiller 14 were arranged.

During casting, the height of the riser 1A was set to 300 mm, and the cast-metal object 8 was produced by gravity casting. In the comparative products in the second production test, slight shrinkage cavities occurred in the Z portions of the four cast-metal objects 8. On the other hand, when the embodied product was to be produced, the free crystal 6 was settled toward the surface 11 of the casting mold 10 (main mold 12) by the gravity and was deposited thereon during solidification of the molten metal 1. As a result, in the embodied products, extremely slight shrinkage cavities occurred in the Z portion of one cast-metal object 8.

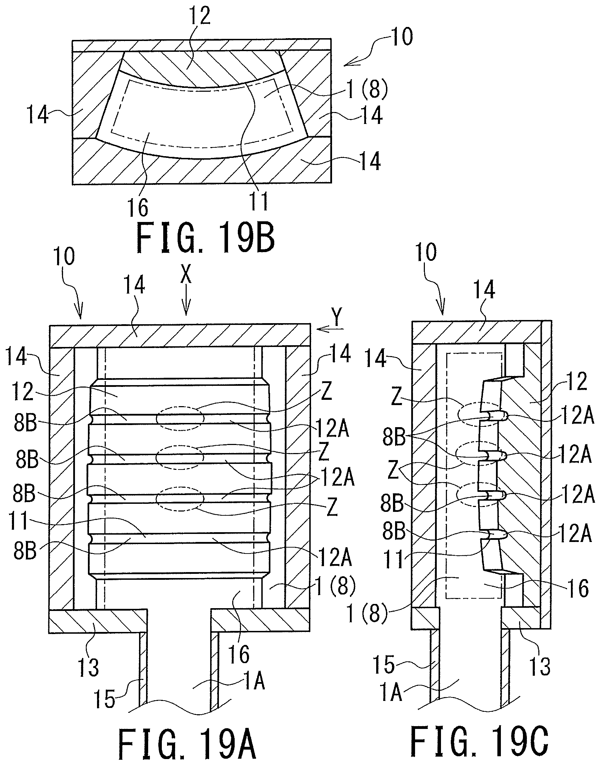

Figs. 19A to 19C are sectional views of the casting mold 10 used in the third production test. Fig. 19A illustrates the casting mold 10 when seen from the front. Fig. 19B illustrates the casting mold 10 when seen from the X-direction of Fig. 19A. Fig. 19C illustrates the casting mold 10 when seen from the Y-direction of Fig. 19A.

As illustrated, the casting mold 10 of the third production test was configured similarly to the casting mold 10 illustrated in Figs. 14A to 14C. The main mold 12 is accommodated in the box-shaped chiller 14 and is arranged on the side part in the casting mold 10.

During casting, the molten metal 1 was supplied into the casting mold 10 by the supply device 30 (not shown in Figs. 19A to 19C), and the cast-metal object 8 was produced by low-pressure casting. At that time, the molten metal 1 was pressurized by the supply device 30 with a predetermined pressure (atmospheric pressure + 0. 05 MPa). In the comparative products in the third production test, slight shrinkage cavities occurred in the Z portions of the four cast-metal objects 8. On the other hand, when the embodied product was to be produced, the free crystal 6 was flowed toward the surface 11 of the casting mold 10 (main mold 12) by the above-described flow F of the molten metal 1 and was deposited thereon during solidification of the molten metal 1. Moreover, the free crystal 6 was deposited on the stagnant portion of the molten metal 1 carried by the flow F of the molten metal 1. As a result, in the embodied products, extremely slight shrinkage cavities occurred in the Z portion of one cast-metal object 8.

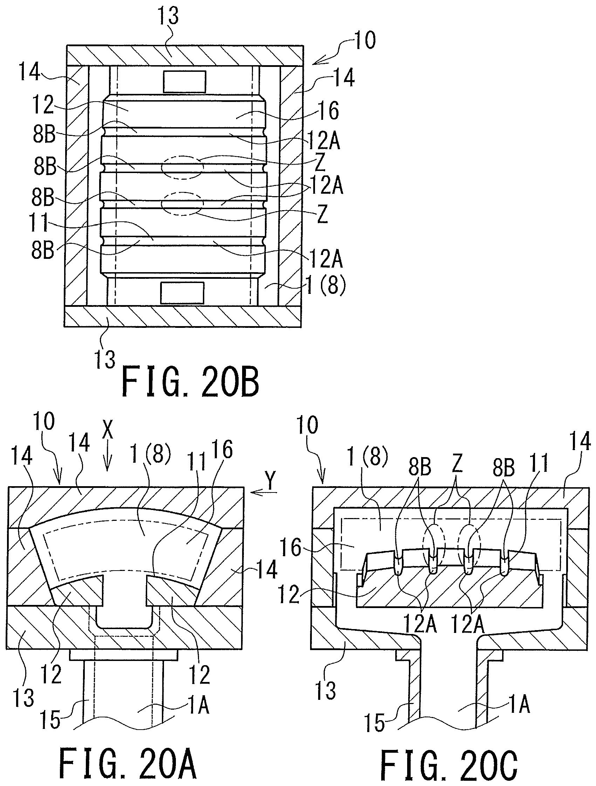

Figs. 20A to 20C are sectional views of the casting mold 10 used in the fourth production test. Fig. 20A illustrates the casting mold 10 when seen from the front. Fig. 20B illustrates the casting mold 10 when seen from the X-direction of Fig. 20A. Fig. 20C illustrates the casting mold 10 when seen from the Y-direction of Fig. 20A.

As illustrated, the casting mold 10 of the fourth production test was configured similarly to the casting mold 10 illustrated in Figs. 14A to 14C. The main mold 12 is accommodated in the box-shaped chiller 14 and is arranged on the lower part of the chiller 14. The molten metal 1 is poured from below the main mold 12 into the casting mold 10 and supplied to the cavity 16 located above the main mold 12.

During casting, the molten metal 1 was supplied into the casting mold 10 by the supply device 30 (not shown in Figs. 20A to 20C), and the cast-metal object 8 was produced by low-pressure casting. At that time, the molten metal 1 was pressurized by the supply device 30 with the predetermined pressure (atmospheric pressure + 0. 05 MPa). In the comparative products in the fourth production test, slight shrinkage cavities occurred in the Z portions of the four cast-metal objects 8. On the other hand, when the embodied product was to be produced, the free crystal 6 was settled toward the surface 11 of the casting mold 10 (main mold 12) by the gravity and was deposited thereon during solidification of the molten metal 1. At the same time, the free crystal 6 was flowed toward the surface 11 of the casting mold 10 by the above-described flow F of the molten metal 1 and was deposited thereon. Moreover, the free crystal 6 was deposited on the stagnant portion of the molten metal 1 carried by the flow F of the molten metal 1. As a result, in the embodied products, shrinkage cavities did not occur in any of the cast-metal objects 8.

As described above, in the embodied products, it was confirmed that occurrence of shrinkage cavities was drastically fewer than the comparative products. Therefore, it was proved that occurrence of the casting defect 7 in the cast-metal object 8 can be suppressed by the present invention. Moreover, the crystal structure of the embodied product (deposited portion 8A) was found to be finer than the crystal structure of the comparative product (portion corresponding to the deposited portion 8A).

### Reference Signs List

- 1: molten metal
- 1A: riser
- 2: solid phase
- 3: liquid phase
- 4: solid-liquid coexisting region
- 5: dendrite
- 6: free crystal
- 7: casting defect
- 8: cast-metal object
- 8A: deposited portion
- 8B: protruding portion
- 10: casting mold
- 11: surface
- 12: main mold
- 12A: concave portion
- 13: molding flask
- 14: chiller
- 15: supply pipe
- 16: cavity
- 20: rotating device
- 21: rotating table
- 30: supply device
- 31: pressurized vessel
- 32: crucible
- 33: heating device
- G: pressurized gas
- K: solidification temperature range
- S: solidification direction

## Claims

1. A process for producing a cast-metal object by solidifying a molten metal in a casting mold, comprising:
installing a main mold for molding the cast-metal object on a lower part of the casting mold;
arranging a surface of the main mold directed upward;
arranging a chiller above the main mold so as to face the main mold;
forming a cavity between the main mold and the chiller;
providing two supply pipes of the molten metal which protrude upward from a side portion of the casting mold;
pouring the molten metal into the casting mold;
solidifying the molten metal from the chiller towards the surface of the main mold;
settling a free crystal in the molten metal toward the surface of the main mold by gravity; and
solidifying the molten metal while depositing the free crystal in the molten metal on the surface of the main mold.

2. A process for producing a cast-metal object by solidifying a molten metal in a casting mold, comprising:
installing the casting mold on an upper part of a supply device of the molten metal; wherein said supply device includes a pressurized vessel, a crucible accommodated in the pressurized vessel, and a heating device for heating the crucible;
providing a supply pipe of the molten metal which protrudes downward from the casting mold and arranging the supply pipe in the pressurized vessel and the crucible;
heating the molten metal in the crucible to a predetermined temperature by the heating device;
pressurizing the molten metal in the crucible;
supplying the molten metal through the supply pipe into the casting mold from the crucible and pouring the molten metal into the casting mold; and
solidifying the molten metal while depositing the free crystal in the molten metal on the surface of the casting mold; wherein
the free crystal in the molten metal is flowed toward the surface of the casting mold by a flow of the molten metal and is deposited on the surface of the casting mold on which the molten metal is stagnant.

3. The process for producing a cast-metal object according to claim 1 or 2, wherein
the cast-metal object is a mold for molding a tire.

## Patentansprüche

1. Verfahren zum Herstellen eines metallischen Gussgegenstandes durch Verfestigen einer Metallschmelze in einer Gussform, umfassend:
Montieren einer Hauptform zum Gießen des metallischen Gussgegenstandes auf einem Unterteil der Gussform;
Anordnen einer Oberfläche der Hauptform, in der Weise dass diese nach oben gerichtet ist;
Anordnen eines Kühlers oberhalb der Hauptform, sodass dieser der Hauptform zugewandt ist;
Bilden eines Hohlraums zwischen der Hauptform und dem Kühler;
Bereitstellen zweier Zuführrohre für die Metallschmelze, welche nach oben von einem Seitenabschnitt der Gussform vorstehen;
Gießen der Metallschmelze in die Gussform;
Verfestigen der Metallschmelze aus dem Kühler zur Oberfläche der Hauptform;
Absetzen eines freien Kristalls in der Metallschmelze zur Oberfläche der Hauptform durch Gewichtskraft; und
Verfestigen der Metallschmelze während des Abscheidens des freien Kristalls in der Metallschmelze auf der Oberfläche der Hauptform.

2. Verfahren zum Herstellen eines metallischen Gussgegenstandes durch Verfestigen einer Metallschmelze in einer Gussform, umfassend:
Montieren der Gussform auf einem oberen Teil einer Zuführvorrichtung für die Metallschmelze; wobei die Zuführvorrichtung einen Druckbehälter, einen Tiegel, welcher im Druckbehälter aufgenommen ist und eine Heizvorrichtung zum Heizen des Tiegels umfasst;
Bereitstellen eines Zuführrohrs für die Metallschmelze, welcher nach unten von der Gussform vorsteht, und Anordnen des Zuführrohrs in den Druckbehälter und in den Tiegel;
Heizen der Metallschmelze im Tiegel bis zu einer vorbestimmten Temperatur mittels der Heizvorrichtung;
Unterdrucksetzen der Metallschmelze im Tiegel;
Zuführen der Metallschmelze vom Tiegel durch das Zuführrohr in die Gussform und Gießen der Metallschmelze in die Gussform; und
Verfestigen der Metallschmelze während des Abscheidens des freien Kristalls in der Metallschmelze auf der Oberfläche der Gussform;
wobei der freie Kristall in der Metallschmelze zur Oberfläche der Gussform durch einen Strom von Metallschmelze geleitet und auf der Oberfläche der Gussform abgesetzt wird, auf welcher die Metallschmelze stagniert.

3. Verfahren zum Herstellen eines metallischen Gussgegenstandes nach Anspruch 1 oder 2, wobei
das metallische Gussgegenstand eine Form zum Formen eines Reifens ist.

## Revendications

1. Procédé de production d'un objet métallique coulé en métal en solidifiant un métal fondu dans un moule de coulée, comprenant les étapes ci-dessous :
installation d'un moule principal pour mouler l'objet coule en métal sur une partie inférieure du moule de coulée ;
agencement d'une surface du moule principal de sorte à être dirigée vers le haut ;
agencement d'un refroidisseur au-dessus du moule principal de sorte à faire face au moule principal ;
formation d'une cavité entre le moule principal et le refroidisseur ;
fourniture de deux tuyaux d'alimentation du métal fondu, débordant vers le haut à partir d'une partie latérale du moule de coulée ;
versement du métal fondu dans le moule coulée ;
solidification du métal fondu, du refroidisseur vers la surface du moule principal ;
sédimentation d'un cristal libre dans le métal fondu vers la surface du moule principal par gravité ; et
solidification du métal fondu tout en déposant le cristal libre dans le métal fondu sur la surface du moule principal.

2. Procédé de production d'un objet coulé en métal en solidifiant un métal fondu dans un moule de coulée, comprenant les étapes ci-dessous :
installation du moule de coulée sur une partie supérieure d'un dispositif d'alimentation du métal fondu ; dans lequel ledit dispositif d'alimentation inclut un réservoir sous pression, un creuset logé dans le réservoir sous pression, et un dispositif de chauffage pour chauffer le creuset ;
fourniture d'un tuyau d'alimentation du métal fondu, débordant vers le bas à partir du moule de coulée et la disposition du tuyau d'alimentation dans le réservoir sous pression et le creuset ;
chauffage du métal fondu dans le creuset à une température prédéterminée par le dispositif de chauffage ;
pressurisation du métal fondu dans le creuset ;
agencement du tuyau d'alimentation dans le récipient sous pression et le creuset ;
alimentation du métal fondu à travers le tuyau d'alimentation dans le moule de coulée à partir du creuset et versement du métal fondu dans le moule de coulée ; et
solidification du métal fondu tout en déposant le cristal libre dans le métal fondu sur la surface du moule de coulée ; dans lequel :
le cristal libre dans le métal fondu s'écoule vers le surface du moule de coulée par un écoulement du métal fondu et est déposé sur la surface du moule de coulée sur lequel le métal fondu est stagnant.

3. Procédé de production d'un objet coulé en métal selon les revendications 1 ou 2, dans lequel :
l'objet coulé en métal est un moule pour mouler un bandage pneumatique.
